# EUROPÄISCHE PATENTSCHRIFT

(11) **EP 2 167 302 B1**
(45) Veröffentlichungstag und Bekanntmachung des Hinweises auf die Patenterteilung: **10.06.2015**
(21) Anmeldenummer: 08749354.0
(22) Anmeldetag: 07.05.2008
(51) Int. Cl.: B29C 49/42, B29C 69/00, B29C 49/04, B32B 27/00

(54) **VERFAHREN ZUR HERSTELLUNG VON HOHLKÖRPERN AUS THERMOPLASTISCHEM KUNSTSTOFF, EINRICHTUNG DAZA UND HERGESTELLTER KRAFTSOFFBEHÄLTER**
METHOD FOR THE PRODUCTION OF HOLLOW BODIES FROM THERMOPLASTIC PLASTIC, DEVICE FOR PERFORMING SAID METHOD, AND FUEL CONTAINER THUS PRODUCED
PROCÉDÉ DE FABRICATION DE CORPS CREUX EN MATIÈRE SYNTHÉTIQUE THERMOPLASTIQUE, DISPOSITIF ASSOCIÉ ET RÉCIPIENT EN MATIÈRE SYNTHÉTIQUE AINSI FABRIQUÉ

(30) Priorität: 20.06.2007 DE 102007028881
(43) Veröffentlichungstag der Anmeldung: 31.03.2010
(73) Patentinhaber: Kautex Textron GmbH & Co. KG, 53229 Bonn (DE)
(72) Erfinder: ECKHARDT, Joachim, 53229 Bonn (DE); FRANKE-MAINTZ, Matthias, 53773 Hennef (DE); WOLTER, Gerd, 53639 Königswinter (DE)
(74) Vertreter: Kierdorf Ritschel
(86) Internationale Anmeldenummer: PCT/EP2008/003633
(87) Internationale Veröffentlichungsnummer: WO 2008/154988

(56) Entgegenhaltungen:
- EP-A- 1 334 817
- WO-A-2006/064057
- DE-U1-202006 013 751
- JP-A- 9 001 640
- JP-A- 60 125 633
- JP-A- 60 141 521

## Beschreibung

Die Erfindung betrifft ein Verfahren zur Herstellung von Hohlkörpern aus thermoplastischem Kunststoff, umfassend die Extrusion bahnförmiger Vorformlinge aus thermoplastischem Kunststoff, das Einbringen der Vorformlinge in ein Formwerkzeug mit einem Formhohlraum, der zumindest teilweise die Kontur des zu fertigenden Hohlkörpers definiert, und das Ausformen der Vorformlinge innerhalb des Werkzeugs unter Anwendung von Vakuum und/oder Gasdruck in der ersten Hitze des Materials, wobei die auszuformenden und zu verbindenden Vorformlinge zeitgleich ausgeformt werden.

Die Erfindung betrifft weiterhin eine Einrichtung zur Durchführung des Verfahrens sowie einen Kraftstoffbehälter aus thermoplastischem Kunststoff, der durch Extrusionsblasformen zweier bahnförmiger Vorformlinge aus thermoplastischem Kunststoff erhalten wurde.

Ein Verfahren zur Herstellung von Hohlkörpern aus thermoplastischem Kunststoff, insbesondere zur Herstellung von Kraftstoffbehältern aus thermoplastischem Kunststoff, bei welchen bahnförmige Vorformlinge extrudiert werden und in der ersten Hitze in einem mehrteiligen Blasformwerkzeug zu einem geschlossenen Behälter umgeformt werden, sind grundsätzlich bekannt.

In der japanischen Druckschrift JP 06141521 wird ein Verfahren offenbart, bei dem zwei bahnförmige Vorformlinge aus thermoplastischem Kunststoff zeitlich nacheinander extrudiert werden um mit einem Formwerkzeug zu einem doppelwandigen Behälter zusammengesetzt zu werden. Dabei werden die zwei bahnförmigen Vorformlinge zeitlich nacheinander ausgeformt und zu dem doppelwandigen Behälter zusammengesetzt.

Ferner ist beispielsweise aus dem deutschen Gebrauchsmuster 20 2006 013 751 eine Vorrichtung zur Durchführung eines Verfahrens bekannt, bei welchem zunächst thermoplastisches Material in bekannter Art und Weise in einem Extruder plastifiziert wird und innerhalb eines Extrusionskopfs zu einem schlauchförmigen Schmelzestrang geformt wird. Mittels eines Adapters wird der schlauchförmige Schmelzestrang in zwei bahnförmige Schmelzestränge umgeformt. Diese bahnförmigen Vorformlinge werden aus zwei nebeneinander angeordneten Breitschlitzdüsen des Extrusionskopfs parallel extrudiert. Die bahnförmigen Vorformlinge werden sodann in einem mehrteiligen Werkzeug, umfassend zwei Außenformen und eine Mittenform, zu einem aus zwei Halbschalen zusammengesetzten Kunststoffbehälter umgeformt. Mittels Verstellung des Düsenspalts der Breitschlitzdüsen wird jedem Vorformling ein Wanddickenprofil aufgegeben, das einerseits dem Umstand Rechnung trägt, dass der Artikel Bereiche unterschiedlicher Wanddicke aufweisen soll, und was andererseits dem Umstand Rechnung trägt, dass je nach Gestalt des herzustellenden des herzustellenden Behälters das thermoplastische Material innerhalb des Formwerkzeugs bereichsweise mehr oder weniger gestreckt bzw. gelängt (gedehnt) wird. Um hieraus resultierende Materialanhäufungen oder unerwünschte Materialausdünnungen zu vermeiden, ist es bekannt, die Dicke der Vorformlinge über deren Länge als auch quer hierzu zu variieren.

Die Wanddickensteuerung bei der Extrusion ist beispielsweise auch bei der Herstellung schlauchförmiger Vorformlinge hinlänglich bekannt.

Ein Verfahren nach dem Oberbegriff von Anspruch 1 wird in der JP 09001640 offenbart. In dem dort beschriebenen Verfahren wird ein einzelner bahnförmige Vorformling aus einem an einer Stelle aufgeschnittenen schlauchförmigen Schmelzestrom extrudiert. Die Breite des bahnförmigen Vorformlings ergibt sich entsprechend zum Umfang des schlauchförmigen Schmelzestroms. Der so hergestellte Vorformling weist gegenüber anderen Verfahren erheblich größere Abmessungen auf. Zum Ausformen wird der Vorformling zu einer U-förmigen Form mit zwei senkrechten Abschnitten umgeklappt, wobei die beiden Abschnitte innerhalb eines zweitteiligen Formwerkzeugs jeweils zu den Halbschalen eines Hohlkörpers geformt und zu einem Hohlkörper zusammengesetzt werden.

Üblicherweise erfolgt die Extrusion der Vorformlinge beim Extrusionsblasformen hängend, d.h. in Schwerkraftrichtung, was je nach Massenverteilung der Vorformlinge zur Folge haben kann, dass diese bei der Extrusion eine unterschiedliche Längung erfahren, die bedingt durch die Gewichtskraft der extrudierten Masse ist.

Der bei der Extrusion zur Verfügung stehende Massenstrom an plastifiziertem Kunststoff ist üblicherweise konstant und wird innerhalb des Extrusionskopfs gleichmäßig geteilt und den Austrittsspalten der beiden Düsen zugeführt. Unterschiedliche Materialverteilungen innerhalb der beiden Vorformlinge durch die Wanddickenveränderung können zu erheblichen Längenunterschieden der Vorformlinge führen, was unter Umständen problematisch ist. Unter anderem muss auch sichergestellt werden, dass die Wanddickenverteilung des Vorformlings so gewählt ist, dass jeweils dickere und/oder dünnere Bereiche des Vorformlings an der entsprechenden Stelle im Formwerkzeug platziert sind.

Die zuvor beschriebene Vorgehensweise hat weiterhin den Nachteil, dass die Zykluszeit des Verfahrens sich insgesamt nach der Extrusionszeit desjenigen Vorformlings richtet, der die größte Wandstärke hat. Gerade die Optimierung von Zykluszeiten bei der Herstellung von extrusionsblasgeformten Bauteilen stellt einen beachtlichen Wirtschaftlichkeitsfaktor dar.

Der Erfindung liegt daher die Aufgabe zugrunde, ein Verfahren bereitzustellen, welches die zuvor geschilderten Nachteile vermeidet.

Erfindungsgemäß wird die Aufgabe durch ein Verfahren zur Herstellung von Hohlkörpern aus thermoplastischem Kunststoff, umfassend die Extrusion bahnförmiger Vorformlinge aus thermoplastischem Kunststoff, das Einbringen der Vorformlinge in ein Formwerkzeug mit einem Formhohlraum, der zumindest teilweise die Kontur des zu fertigenden Hohlkörpers definiert, und das Ausformen der Vorformlinge innerhalb des Werkzeugs unter Anwendung von Vakuum und/oder Gasdruck in der ersten Hitze des Materials, wobei die auszuformenden und zu verbindenden Vorformlinge zeitgleich ausgeformt werden, wobei sich das Verfahren dadurch auszeichnet, dass wenigstens zwei bahnförmige Vorformlinge aus thermoplastischem Kunststoff extrudiert werden, und die wenigstens zwei bahnförmigen zu einem Hohlkörper auszuformende und zu verbindende Vorformlinge zeitlich nacheinander (sequenziell) extrudiert werden.

In der ersten Hitze des Materials im Sinne der Erfindung bedeutet, dass die Vorformlinge ohne weitere Wärmezufuhr zu dem fertigen Artikel weiterverarbeitet werden.

Das Verfahren gemäß der Erfindung hat verschiedene Vorzüge gegenüber den bisher im Stand der Technik gebräuchlichen Verfahren. Die Vorformlinge können mit stark unterschiedlicher Massenverteilung extrudiert werden, ohne dass bei der Ausbildung eines Vorformlings die Materialverteilung und der Schmelzestrom des anderen Vorformlings zu berücksichtigen wäre. Dieses Verfahren erlaubt die Einsparung von Kunststoffmaterial, in dem jede Vorformlingsbahn einzeln hinsichtlich einer optimalen Wanddickenverteilung extrudiert werden kann. Hierdurch lässt sich bei konstantem Durchsatz bzw. bei konstanter Förderleistung der Extruder jede Bahn einzeln optimieren. Besonders vorteilhaft ist es dabei, dass für jede Vorformlingsbahn eine unterschiedliche Extrusionszeit beansprucht werden kann, was bei der Parallelextrusion von mehreren Bahnen verfahrenstechnisch nicht möglich ist.

Auch dem Problem der unterschiedlichen Längung der Vorformlingsbahnen aufgrund unterschiedliche Massenverteilungen wird damit in besonderer Weise Rechnung getragen.

Nach einer bevorzugten Variante des Verfahrens ist die Verwendung eines Extrusionskopfs mit einer einzigen Breitschlitzdüse vorgesehen, deren Düsenspalt im Sinne einer Wanddickensteuerung verstellbar ist.

So wäre es denkbar, für das Verfahren zwei Extrusionsköpfe mit jeweils zwei Breitschlitzdüsen zu verwenden. In diesem Fall können die beiden Extrusionsköpfe Vorformlinge für zwei Formwerkzeuge bereitstellen, die parallel betrieben werden. Im Sinne der Erfindung werden jeweils mit einem Extrusionskopf zwei gleichartige Vorformlinge hergestellt und zwar für zwei Formwerkzeuge.

Bevorzugt wird den Vorformlingen jeweils ein Wanddickenprofil über deren Länge und/oder Breite aufgegeben.

Bei einer Variante des Verfahrens ist vorgesehen, dass ein erster Vorformling und ein zweiter Vorformling, die unmittelbar nacheinander extrudiert werden, mit jeweils voneinander verschiedenen Wanddicken und/oder Gewichten extrudiert werden.

Eine Variante des Verfahrens sieht vor, dass die Vorformlinge nach deren Extrusion auf eine vorgegebene Länge mittels einer oder mehrerer Greifeinrichtungen an dem Extrusionskopf abgenommen werden und mittels der Greifeinrichtungen in das Formwerkzeug verbracht werden.

Alternativ ist es möglich, den Extrusionskopf bezüglich des Formwerkzeugs und/oder das Formwerkzeug bezüglich des Extrusionskopfs zu verfahren.

Bei einer bevorzugten Variante der Erfindung ist die Verwendung eines dreiteiligen Blasformwerkzeugs vorgesehen, mit welchem die Vorformlinge jeweils zu Halbschalen ausgeformt werden, die in einem weiteren Bearbeitungsschritt zu einem im Wesentlichen geschlossenen Hohlkörper miteinander verbunden werden.

Bei dieser Variante des Verfahrens kann das Blasformwerkzeug zwei Außenformen und eine Mittenform umfassen, wobei die Außenformen jeweils Teilkavitäten zur Ausformung einer Halbschale eines Behälters bilden. Die Mittenform kann beispielsweise ein- und ausfahrbare Bauteilhalter umfassen bzw. umschließen, mittels derer Einbauteile während der Ausformung der Halbschalen in dieser eingebracht werden können.

Bei diesem Verfahren ist vorgesehen, dass zunächst die Vorformlinge jeweils zwischen der Mittenform und einer Außenform platziert werden und dann die Mittenform und die Außenform gegeneinander geschlossen werden, so dass ein geschlossener Formhohlraum entsteht. Sodann wird entweder in den Außenformen ein Vakuum angelegt und/oder die Kavität mittels bekannter Blasdorne unter Gasdruck gesetzt, was eine Aufweitung der Vorformlinge innerhalb der Teilkavitäten und ein Anlegen der Vorformlinge an die durch die Teilkavitäten vorgegebene Kontur zur Folge hat. Gleichzeitig oder in einem weiteren Verfahrensschritt können die innerhalb des Behälters benötigten Einbauten über in der Mittenform angeordnete Bauteilhalter auf der Innenwandung des zu fertigenden Behälters platziert werden. Sodann öffnen sich die Teile des Werkzeugs, die Mittenform wird quer zu den Außenformen verfahren, die Außenformen schließen sich gegeneinander, so dass die beiden in den Außenformen befindlichen Halbschalen des zu fertigenden Artikels an flanschartig umlaufenden Rändern miteinander verschweißen. Die Außenformen öffnen sich, der fertige Artikel kann entnommen werden.

Bevorzugt wird mit einem solchen Verfahren ein Kraftstoffbehälter für ein Kraftfahrzeug hergestellt.

Bei einer Variante des Verfahrens ist vorgesehen, dass zwei Vorformlinge so im Formwerkzeug platziert oder in dieses verbracht werden, dass deren einander entsprechende Breitseiten voneinander abgekehrt sind.

Hierzu ist zweckmäßigerweise vorgesehen, dass einer der hintereinander extrudierten Vorformlinge um 180° um seine Längsachse gedreht wird.

Eine solche Vorgehensweise wäre beispielsweise dann vorteilhaft, wenn der Kunststoffbehälter einen mehrschichtigen Wandaufbau haben soll bzw. das Extrudat als mehrschichtiges Coextrudat ausgebildet ist. Dann kann es unter Umständen bei verschieden starken Schichten innerhalb des Coextrudats auf die Lage der Schichten ankommen.

Insbesondere bei der Herstellung von Kraftstoffbehältern ist es beispielsweise üblich, dass der Kraftstoffbehälter eine außen eingefärbte (rußgefüllte) Polyethylenschicht aufweist, wohingegen die Innenschicht aus reinem Polyethylen besteht. Bei einer solchen Anordnung ist die Schichtenlage bezüglich des umschlossenen Hohlraums von Bedeutung.

Es kann auch zweckmäßig sein, einen der hintereinander extrudierten Vorformlinge um 180° um seine Querachse zu drehen, beispielsweise dann, wenn eine liegende Anordnung der Formwerkzeuge vorgesehen ist.

Besonders vorteilhaft ist es, wenn zuerst ein Vorformling mit größerer Wandstärke und sodann ein Vorformling mit geringerer Wandstärke extrudiert werden, die dann zu einem Artikel verarbeitet werden. Hierzu lässt sich in besonders günstiger Art und Weise die Gesamtzykluszeit des Vorgangs beeinflussen. Der dickere Vorformling mit der größeren Masse kühlt naturgemäß langsamer aus, wohingegen der Vorformling mit der geringeren Wandstärke schneller extrudiert wird, so dass insgesamt bei einer solchen Wandstärkenverteilung die sequenzielle Extrusion sowohl thermisch als auch hinsichtlich der benötigten Zykluszeit günstiger ist.

Vorzugsweise wird zunächst ein erster Vorformling in das Formwerkzeug eingebracht und anschließend der zweite Vorformling, wobei eine gemeinsame Ausformung in einem weiteren Bearbeitungsschritt erfolgt. Dies kann entweder so erfolgen, dass der Vorformling mittels des Werkzeugs vom Extrusionskopf abgenommen wird, das dann bezüglich des Extrusionskopfs in mehrere Positionen verfahrbar sein muss. Alternativ kann dies mittels einer Greifeinrichtung erfolgen, die beispielsweise den ersten Vorformling am Extrusionskopf abnimmt und zwischen die Mittenform und eine geöffnete Außenform verfährt. Die Außenform kann bezüglich der Mittenform verfahren werden, so dass der erste Vorformling in dem Formwerkzeug gehalten wird, während der zweite Vorformling extrudiert wird. Eine Aufweitung der Vorformlinge in dem Formwerkzeug würde dann erfolgen, nachdem der zweite Vorformling in das Werkzeug verbracht wurde.

Alternativ kann die Ausformung der Vorformlinge in einem Werkzeug auch zeitlich nacheinander erfolgen.

Alternativ kann eine Greifeinrichtung den ersten Vorformling an dem Extrusionskopf abnehmen und in eine Warteposition verfahren, während der zweite Vorformling extrudiert wird. Sodann würde der zweite Vorformling mittels einer Greifeinrichtung abgenommen, beide Greifeinrichtungen würden synchron die Vorformlinge in das Werkzeug verbringen.

Alternativ wäre die Verwendung eines Doppelgreifers möglich.

Bei der Verwendung von Greifeinrichtungen sind die verschiedensten Varianten denkbar, beispielsweise können um drei Achsen artikulierbare, frei programmierbare Handhabungs- bzw. Robotereinrichtungen Anwendung finden.

Die Aufgabe wird weiterhin gelöst durch eine Einrichtung zur Durchführung des vorstehend beschriebenen Verfahrens, umfassend wenigstens einen Extruder und wenigstens einen Extrusionskopf mit einem als Breitschlitzdüse ausgebildeten Düsenspalt, wobei der Extrusionskopf wenigstens einen auf einem Kreisbogenabschnitt oder einem Kreisbogen angeordneten, als Ringspalt ausgebildeten Schmelzekanal aufweist. Die Einrichtung zeichnet sich dadurch aus, dass Mittel zur Ausbreitung eines kreisbogenförmigen Schmelzestroms in einen einzigen bahnförmigen Schmelzestrom vorgesehen sind.

Die Aufgabe wird schließlich gelöst durch eine Kraftstoffbehälter aus thermoplastischem Kunststoff, der durch Extrusionblasformen zweier bahnförmiger Vorformlinge aus thermoplastischem Kunststoff erhalten wurde. Der Kraftstoffbehälter zeichnet sich dadurch aus, dass die Vorformlinge aus zwei aufeinanderfolgenden Abschnitten eines einzigen Schmelzestrangs zusammengesetzt wurden.

Der Kraftstoffbehälter gemäß der Erfindung besteht bevorzugt aus einem insgesamt sechsschichtigen Coextrudat mit Barriereschichten für Kohlenwasserstoffe. Solche Barriereschichten können beispielsweise aus EVOH (Ethylenvinylalkohol) bestehen. Der Schichtenaufbau umfasst bevorzugt eine äußere rußgefüllte Polyethylenschicht, eine Schicht aus Recyclat (Regrind), eine Haftvermittlerschicht, eine Barriereschicht, eine weitere Haftvermittlerschicht sowie eine Schicht aus reinem Polyethylen.

Dieser Kraftstoffbehälter wird bevorzugt in einem dreiteiligen Formwerkzeug mit einer Mittenform und zwei Außenformen hergestellt. Bevorzugt werden die hierfür benötigten Vorformlinge aus einem Extrusionskopf mit einer Breitschlitzdüse sequenziell extrudiert, wobei zunächst ein Vorformling größerer Wandstärke extrudiert wird, der die Unterseite des Kraftstoffbehälters bildet. Anschließend wird ein Vorformling geringerer Wandstärke extrudiert, der die Oberseite des Kraftstoffbehälters bildet. Einer der beiden Vorformlinge wird nach seiner Extrusion um 180° um seine Längsachse, die sich in Gewichtskraftrichtung erstreckt, gedreht. Sodann werden die Vorformlinge mit dieser Orientierung gemeinsam oder nacheinander in das Formwerkzeug verbracht.

Die Erfindung wird nachstehend anhand eines in den Zeichnungen grob skizzierten Ausführungsbeispiels erläutert:

Es zeigen:
- Figur 1: Eine schematische Seitenansicht einer Anordnung zur Durchführung des Verfahrens gemäß der Erfindung,
- Figur 2: einen Schnitt entlang der Linien II-II in Figur 1,
- Figur 3: die Übergabe eines ersten Vorformlings von einer ersten an eine zweite Greifeinrichtung,
- Figur 4: eine Schnittansicht entlang der Linien IV-IV in Figur 3,

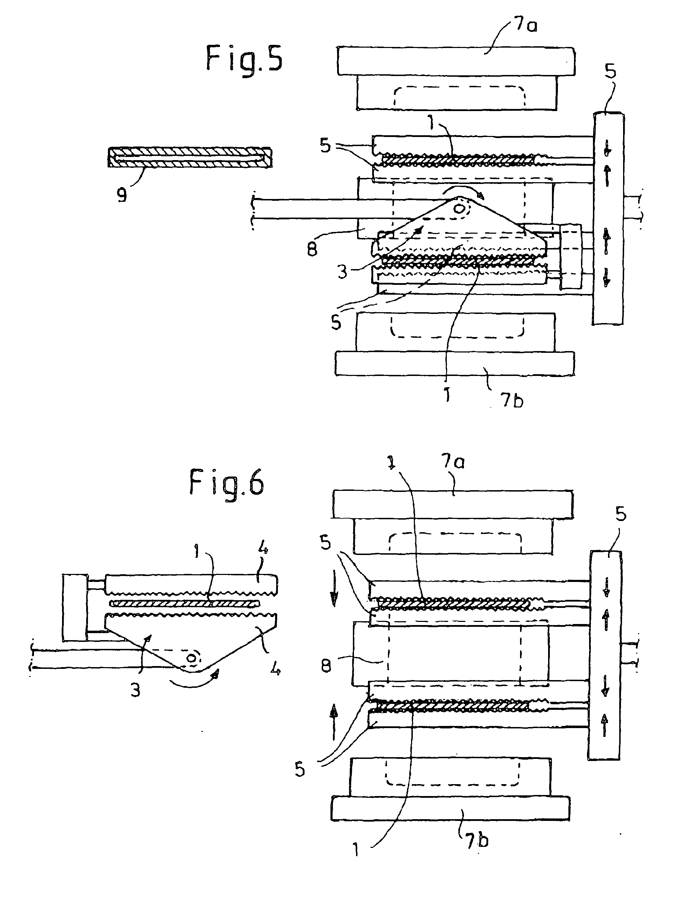

- Figur 5: die Übergabe eines zweiten Vorformlings an die zweite Greifeinrichtung und
- Figur 6: eine der Figur 5 entsprechende Ansicht, wobei die erste Greifeinrichtung sich in der Ausgangsstellung unterhalb des Extrusionskopfs befindet.

Wie vorstehend bereits beschrieben, sieht das Verfahren zunächst die Extrusion eines ersten Vorformlings 1 mittels eines Extrusionskopfs 2 vor, der mit einer Breitschlitzdüse 9 versehen ist.

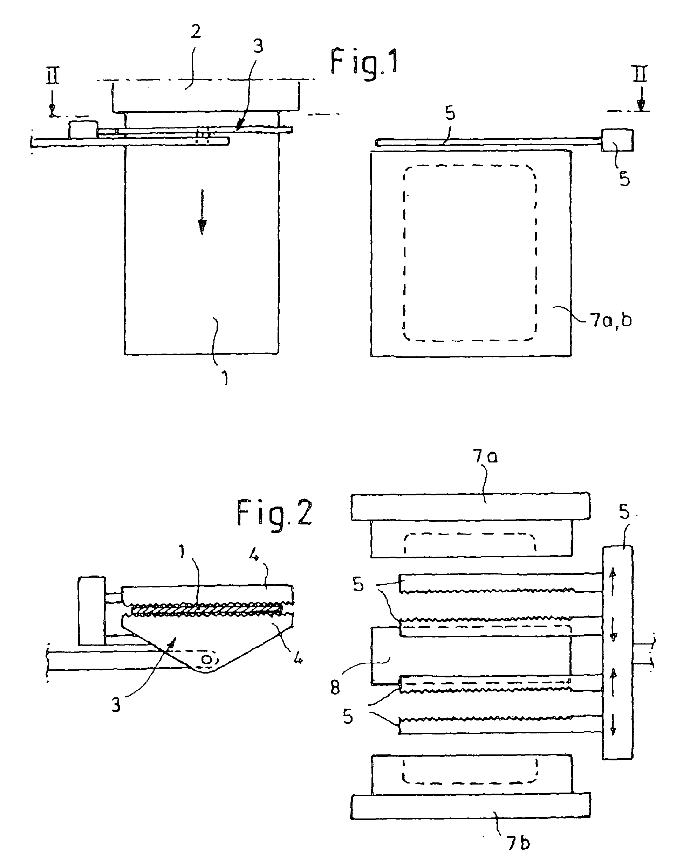

Wie dies in Figur 1 schematisch dargestellt ist, ist zur Handhabung des Vorformlings 1 eine erste Greifeinrichtung 3 vorgesehen, die den Vorformling zwischen beweglichen Greifbacken 4 einklemmt und an dem Extrusionskopf 2 abnimmt.

Um das Abnehmen des Vorformlings 1 an dem Extrusionskopf 2 zu erleichtern, kann eine nicht dargestellte Trennvorrichtung vorgesehen sein. Alternativ ist es möglich, eine Dünnstelle zu extrudieren, die eine Sollrisslinie bildet, so dass die Greifeinrichtung 3 den Vorformling 1 an dem Extrusionskopf 2 abreißen kann.

Die Greifeinrichtung 3 ist wenigstens quer zur Extrusionsrichtung verfahrbar und die Greifbacken 4 sind um eine durch die Extrusionsrichtung definierte Längsachse schwenkbar.

Nachdem die erste Greifeinrichtung 3 den ersten Vorformling 1 am Extrusionskopf 2 abgenommen hat, werden die Greifbacken 4 quer zur Extrusionsrichtung unter dem Extrusionskopf 2 weggefahren, dabei schwenken diese um 180° um die Längsachse.

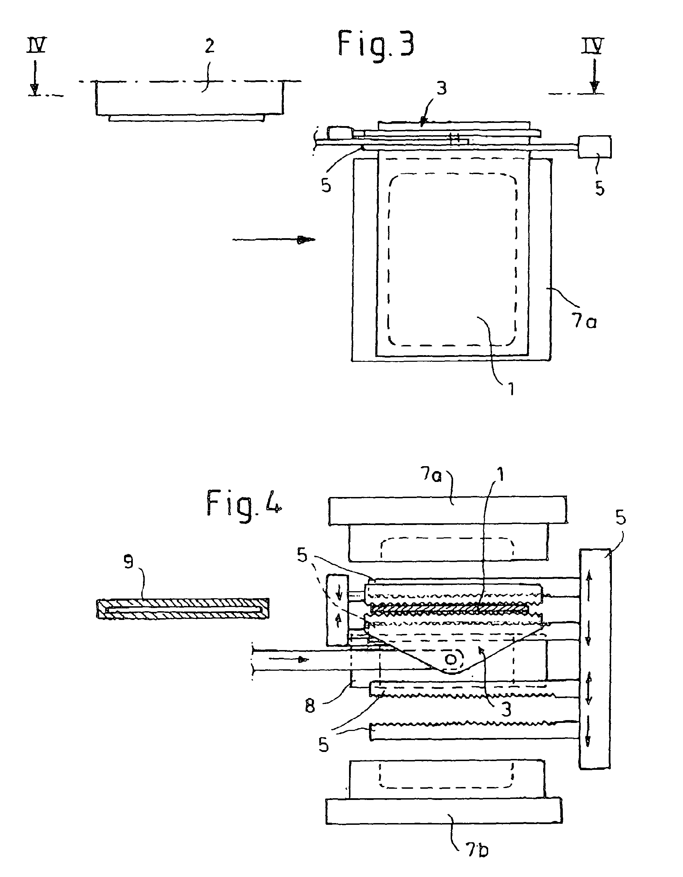

Wie in Figur 3 dargestellt ist, übergibt die erste Greifeinrichtung 3 den ersten Vorformling 1 an eine zweite Greifeinrichtung 5, die bei der in den Figuren dargestellte Variante als Doppelgreifer ausgebildet ist. Sodann fährt die erste Greifeinrichtung 3 wieder zurück unter den Extrusionskopf 2 und übernimmt einen zweiteren Vorformling 1. Dieser Vorformling wird in bekannter Art und Weise von dem Extrusionskopf 2 abgenommen. Die erste Greifeinrichtung 3 fährt unter dem Extrusionskopf 2 weg und übergibt den zweiten Vorformling 1 der in Warteposition stehenden zweiten Greifeinrichtung 5.

Die zweite Greifeinrichtung 5 fährt nun die von dieser aufgenommenen Vorformlinge 1 zwischen die geöffneten Teile des in Figur 3 dargestellten Formwerkzeugs 6.

In der Zeichnung ist die zweite Greifeinrichtung 5 oberhalb des Formwerkzeugs 6 angeordnet, die Erfindung ist jedoch so zu verstehen, dass die zweite Greifeinrichtung 5 bezüglich des Formwerkzeugs 6 verfahrbar sein kann.

Das Formwerkzeug 6 umfasst, wie vorstehend erwähnt, zwei Außenformen 7a, b und eine Mittenform 8.

Bei der gezeigten Variante des erfindungsgemäßen Verfahrens werden beide Vorformlinge 1 mittels der zweiten Greifeinrichtung 5 gleichzeitig jeweils zwischen die geöffneten Außenformen 7a, b und die Mittenform 8 verbracht.

Die zweite Greifeinrichtung 5 ist so ausgebildet, dass die Greifbackenpaare der Greifeinrichtung jeweils einen dynamisch veränderbaren Abstand voneinander aufweisen, so dass eine Anpassung des Abstands der Vorformlinge 1 zueinander zwischen den Teilen des Formwerkzeugs 6 möglich ist. Somit ist eine Anpassung an die besonderen Gegebenheiten des Formwerkzeugs 6 möglich.

In einem weiteren Verfahrensschritt schließen die Außenformen 7a, b sich gegen die Mittenform 8 in Richtung der in der Figur 3 eingezeichneten Pfeile. Ist das Formwerkzeug 6 geschlossen, werden die Vorformlinge als innerhalb der in den Außenformen 7a, b vorgesehenen Teilkavitäten ausgeformt. Über die Mittenform 8 werden Einbauteile in der Wandung des zu fertigenden Artikels platziert.

Nach Ausformung der Halbschalen des Behälters öffnen sich die Außenformen 7a, b bezüglich der Mittenform 8. Die Mittenform wird quer zur Öffnungs- und Schließbewegung der Außenformen 7a, b zwischen diesen verfahren, so dass in einem weiteren Verfahrensschritt die Außenformen 7a, b sich gegeneinander schließen können. Die Halbschalen des zu fertigenden Behälters werden dabei miteinander verschweißt. Schließlich werden die Außenformen 7a, b wieder geöffnet. Der fertige Artikel kann entnommen werden.

### Bezugszeichenliste:

- 1: Vorformling
- 2: Extrusionskopf
- 3: erste Greifeinrichtung
- 4: Greifbacken
- 5: zweite Greifeinrichtung
- 6: Formwerkzeug
- 7a, b: Außenformen
- 8: Mittenform
- 9: Breitschlitzdüse

## Patentansprüche

1. Verfahren zur Herstellung von Hohlkörpern aus thermoplastischem Kunststoff, umfassend die Extrusion bahnförmiger Vorformlinge aus thermoplastischem Kunststoff, das Einbringen der Vorformlinge in ein Formwerkzeug mit einem Formhohlraum, der zumindest teilweise die Kontur des zu fertigenden Hohlkörpers definiert, und das Ausformen der Vorformlinge innerhalb des Werkzeugs unter Anwendung von Vakuum und/oder Gasdruck in der ersten Hitze des Materials, wobei die auszuformenden und zu verbindenden Vorformlinge zeitgleich ausgeformt werden, **dadurch gekennzeichnet, dass** wenigstens zwei bahnförmige Vorformlinge aus thermoplastischem Kunststoff extrudiert werden, und die wenigstens zwei bahnförmigen zu einem Hohlkörper auszuformende und zu verbindende Vorformlinge zeitlich nacheinander, d.h. sequenziell, extrudiert werden.

2. Verfahren nach Anspruch 1, **gekennzeichnet durch** die Verwendung eines Extrusionskopfs mit einer einzigen Breitschlitzdüse, deren Düsenspalt im Sinne einer Wanddickensteuerung verstellbar ist.

3. Verfahren nach einem der Ansprüche 1 oder 2, **dadurch gekennzeichnet, dass** den Vorformlingen jeweils ein Wanddickenprofil über deren Länge und/oder Breite aufgegeben wird.

4. Verfahren nach einem der Ansprüche 1 - 3, **dadurch gekennzeichnet, dass** ein erster Vorformling und ein zweiter Vorformling, die unmittelbar nacheinander extrudiert werden, mit jeweils voneinander verschiedenen Wanddicken und/oder Gewichten extrudiert werden.

5. Verfahren nach einem der Ansprüche 1 - 4, **dadurch gekennzeichnet, dass** die Vorformlinge nach deren Extrusion auf eine vorgegebene Länge mittels einer oder mehrerer Greifeinrichtungen an dem Extrusionskopf abgenommen werden und mittels der Greifeinrichtungen in das Formwerkzeug verbracht werden.

6. Verfahren nach einem der Ansprüche 1 - 5, **gekennzeichnet durch** die Verwendung eines dreiteiligen Blasformwerkzeugs, mit welchem die Vorformlinge jeweils zu Halbschalen ausgeformt werden, die in einem weiteren Bearbeitungsschritt zu einem im Wesentlichen geschlossenen Hohlkörper miteinander verbunden werden.

7. Verfahren zur Herstellung eines Kraftstoffbehälters für Kraftfahrzeuge nach einem der Ansprüche 1 - 6.

8. Verfahren nach einem der Ansprüche 1 - 7, **dadurch gekennzeichnet, dass** zwei Vorformlinge so in dem Formwerkzeug platziert werden oder in dieses verbracht werden, dass deren einander entsprechende Breitseiten voneinander abgekehrt sind.

9. Verfahren nach Anspruch 8, **dadurch gekennzeichnet, dass** einer der hintereinander extrudierten Vorformlinge um 180° um seine Längsachse gedreht wird.

10. Verfahren nach einem der Ansprüche 1 - 9, **dadurch gekennzeichnet, dass** zuerst ein Vorformling mit größerer Wandstärke und sodann ein Vorformling mit geringerer Wandstärke extrudiert wird, die dann zu einem Artikel verarbeitet werden.

11. Verfahren nach einem der Ansprüche 1 - 10, **dadurch gekennzeichnet, dass** zunächst ein erster Vorformling in das Formwerkzeug eingebracht wird und anschließend der zweite Vorformling, wobei vorzugsweise eine gemeinsame Ausformung in einem zweiten Bearbeitungsschritt erfolgt.

12. Verfahren nach einem der Ansprüche 1-11, **dadurch gekennzeichnet, dass** ein erster Vorformling in eine Wartestellung verbracht wird, während ein zweiter Vorformling extrudiert wird und dass die Vorformlinge sodann gemeinsam in das Formwerkzeug verbracht werden.

## Claims

1. Method for the production of hollow bodies from thermoplastic plastic, comprising the extrusion of sheet-like preforms from thermoplastic plastic, the introduction of the preforms into a moulding die with a mould cavity which defines at least partially the contour of the finished hollow body, and the shaping of the preforms inside the die using a vacuum and/or gas pressure in the first heat of the material, wherein the preforms to be shaped and joined are shaped simultaneously, **characterised in that** at least two preforms are extruded from thermoplastic plastic and the at least two sheet-like preforms to be shaped and joined to form a hollow body are extruded one after the other, i.e. sequentially.

2. Method in accordance with claim 1, **characterised by** the use of an extrusion head with a single sheet die whose nozzle gap can be adjusted in terms of controlling the wall thickness.

3. Method in accordance with one of claims 1 or 2, **characterised in that** the preforms are each provided with a wall thickness profile along their length and/or across their width.

4. Method in accordance with one of claims 1 - 3, **characterised in that** a first preform and a second preform which are extruded one immediately after the other are extruded each with wall thicknesses and/or weights that are different from each other.

5. Method in accordance with one of claims 1 - 4, **characterised in that**, after their extrusion to a predetermined length, the preforms are removed by means of one or a multiplicity of gripping devices at the extrusion head and introduced into the forming die by means of gripping devices.

6. Method in accordance with one of claims 1 - 5, **characterised by** the use of a three-part blow moulding tool with which the preforms are each shaped into half shells which are joined together in a further operation to make an essentially closed hollow body.

7. Method to produce a fuel container for motor vehicles in accordance with one of the claims 1 - 6.

8. Method in accordance with one of the claims 1 - 7, **characterised in that** two preforms are placed in the forming die, or introduced into it, in such a way that their correlating wide sides are turned away from each other.

9. Method in accordance with claim 8, **characterised in that** one of the successively extruded preforms is rotated by 180° about its longitudinal axis.

10. Method in accordance with one of the claims 1 - 9, **characterised in that** firstly a preform with a greater wall thickness and then a preform with a smaller wall thickness is extruded, which are then processed to make an article.

11. Method in accordance with one of the claims 1 - 10, **characterised in that** firstly a first preform is introduced into the forming die followed by the second preform wherein preferably mutual shaping takes place in a second operation.

12. Method in accordance with one of the claims 1 - 11, **characterised in that** a first preform is introduced into a first waiting position while a second preform is extruded and the preforms are then introduced mutually into the forming die.

## Revendications

1. Procédé servant à fabriquer des corps creux à partir d'une matière synthétique thermoplastique, comprenant l'extrusion de préformes, présentant une forme de bande, en une matière synthétique thermoplastique, l'introduction des préformes dans un outil de moulage comprenant un espace creux de moulage, lequel définit au moins en partie le contour du corps creux à produire, et le démoulage des préformes situées à l'intérieur de l'outil en utilisant le vide et/ou une pression de gaz dans la première chaleur du matériau, sachant que les préformes à démouler et à assembler sont démoulées dans le même temps, **caractérisé en ce qu'**au moins deux préformes présentant une forme de bande en une matière synthétique thermoplastique sont extrudées, et **en ce que** les deux préformes ou plus présentant une forme de bande, à démouler et à assembler pour obtenir un corps creux sont extrudées l'une après l'autre dans le temps, en d'autres termes successivement.

2. Procédé selon la revendication 1, **caractérisé par** l'utilisation d'une tête d'extrusion comprenant une unique filière à fente large, dont la largeur de filière peut être ajustée au sens d'un contrôle de l'épaisseur de paroi.

3. Procédé selon l'une quelconque des revendications 1 ou 2, **caractérisé en ce que** respectivement un profil d'épaisseur de paroi est ajouté aux préformes sur leur longueur et/ou leur largeur.

4. Procédé selon l'une quelconque des revendications 1 à 3, **caractérisé en ce qu'**une première préforme et une deuxième préforme, qui sont extrudées directement l'une après l'autre, sont extrudées avec des épaisseurs de paroi et/ou des poids différents les uns des autres.

5. Procédé selon l'une quelconque des revendications 1 à 4, **caractérisé en ce que** les préformes sont retirées après leur extrusion, à une longueur prédéfinie, au moyen d'un ou de plusieurs dispositifs de préhension au niveau de la tête d'extrusion et sont amenées, au moyen des dispositifs de préhension, dans l'outil de moulage.

6. Procédé selon l'une quelconque des revendications 1 à 5, **caractérisé par** l'utilisation d'un outil de moulage par soufflage en trois parties, à l'aide duquel les préformes sont démoulées respectivement pour former des demi-coques, qui sont assemblées entre elles, au cours d'une autre étape d'usinage, pour former un corps creux essentiellement fermé.

7. Procédé servant à fabriquer un réservoir de carburant pour des véhicules automobiles selon l'une quelconque des revendications 1 à 6.

8. Procédé selon l'une quelconque des revendications 1 à 7, **caractérisé en ce que** deux préformes sont placées dans l'outil de moulage de telle manière ou sont amenées dans ce dernier de telle manière que les côtés de la largeur correspondant les uns aux autres sont opposés les uns aux autres.

9. Procédé selon la revendication 8, **caractérisé en ce qu'**un des préformes extrudées les unes derrière les autres est tournée de 180° autour de son axe longitudinal.

10. Procédé selon l'une quelconque des revendications 1 à 9, **caractérisé en ce que** dans un premier temps une préforme présentant une épaisseur de paroi plus grande est extrudée, puis une préforme présentant une épaisseur de paroi plus petite est extrudée, lesquelles sont alors transformées de manière à former un article.

11. Procédé selon l'une quelconque des revendications 1 à 10, **caractérisé en ce que** dans un premier temps une première préforme puis la deuxième préforme sont introduites dans l'outil de moulage, sachant que de préférence un démoulage conjoint est effectué au cours d'une deuxième étape d'usinage.

12. Procédé selon l'une quelconque des revendications 1 à 11, **caractérisé en ce qu'**une première préforme est amenée dans une position d'attente, tandis qu'une deuxième préforme est extrudée, et **en ce que** les préformes sont dès lors amenées ensemble dans l'outil de moulage.
